# EUROPÄISCHE PATENTANMELDUNG

(11) **EP 4 527 714 A2**
(43) Veröffentlichungstag der Anmeldung: **26.03.2025**
(21) Anmeldenummer: 24198838.5
(22) Anmeldetag: 06.09.2024
(51) Int. Cl.: B61L 15/00, B61K 9/12, G01M 17/10

(54) **VERFAHREN UND VORRICHTUNG ZUM BETRIEB EINES SCHIENENFAHRZEUGS MIT EINER MEHRZAHL VON AUSTAUSCHBAREN KOMPONENTEN**

(30) Priorität: 22.09.2023 DE 102023209298
(71) Anmelder: Siemens Mobility GmbH, 81739 München (DE)
(72) Erfinder: Wagenhäuser, Stefan, 91058 Erlangen (DE); Wolf, Günter, 90425 Nürnberg (DE)
(74) Vertreter: Siemens Patent Attorneys

(57) **Zusammenfassung**

Die Erfindung betrifft ein Verfahren und eine Vorrichtung zum Betrieb eines Schienenfahrzeugs (1) mit einer Mehrzahl von austauschbaren Komponenten (3), bei welchem ein drahtlos auslesbares Markierungselement (9) an wenigstens einer der Mehrzahl von austauschbaren Komponenten (3) befestigt ist. Um den Betrieb des Schienenfahrzeugs zu verbessern, ist eine Leseeinrichtung (20, 21) eingerichtet, das Markierungselement (9) auszulesen. Die Leseeinrichtung ist an einer Drehgestellvorrichtung (13) und/oder einem Fahrzeugkasten (15) des Schienenfahrzeugs (1) befestigt. Eine Komponenteninformation wird aus dem Markierungselement (9), welches sich in der Umgebung der Leseeinrichtung (20, 21) befindet, ausgelesen. Das Schienenfahrzeug (1) wird in Abhängigkeit der ausgelesenen Komponenteninformationen betrieben.

## Beschreibung

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zum Betrieb eines Schienenfahrzeugs mit einer Mehrzahl von austauschbaren Komponenten, bei welchem ein drahtlos auslesbares Markierungselement an wenigstens einer der Mehrzahl von austauschbaren Komponenten befestigt ist. Die Erfindung betrifft ferner eine Vorrichtung zum Betrieb eines Schienenfahrzeugs mit einer Mehrzahl von austauschbaren Komponenten. Die Vorrichtung umfasst ein drahtlos auslesbares Markierungselement, welches an wenigstens einer der Mehrzahl von austauschbaren Komponenten befestigt ist.

Grundsätzlich ist es bekannt, Komponenten von Systemen unterschiedlicher Art mittels RFID-Tags zu handhaben (RFID: Radio Frequency Identification). Dies beinhaltet die Verwaltung, Instandhaltung, Überwachung, Tracking, etc. der Komponenten.

Zudem ist es bekannt, die Instandhaltung von Komponenten eines Schienenfahrzeugs über ein softwarebasiertes Verwaltungssystem zu verwalten. Die entsprechenden Komponenten werden dabei manuell nachverfolgt. Das Instandhaltungspersonal muss hierfür entsprechende Informationen bzw. Daten aufnehmen und in das Verwaltungssystem eingeben.

Vor diesem Hintergrund ist es Aufgabe der vorliegenden Erfindung, den Betrieb eines Schienenfahrzeugs zu verbessern.

Diese Aufgabe wird durch ein erfindungsgemäßes Verfahren eingangs genannter Art gelöst, bei welchem eine Leseeinrichtung eingerichtet ist, das Markierungselement auszulesen. Die Leseeinrichtung ist an einer Drehgestellvorrichtung und/oder einem Fahrzeugkasten des Schienenfahrzeugs befestigt. Bei dem Verfahren wird eine Komponenteninformation aus dem Markierungselement, welches sich in der Umgebung der Leseeinrichtung befindet, ausgelesen. Das Schienenfahrzeug wird in Abhängigkeit der ausgelesenen Komponenteninformationen betrieben.

Die Erfindung basiert auf der Erkenntnis, dass bestimmte Komponenten eines Schienenfahrzeugs während der Lebensdauer ausgetauscht werden. Insbesondere bei austauschbaren Komponenten benötigt die Instandhaltung eine Zeitdauer, die in der Regel die Dauer eines typischen Aufenthalts im Depot überschreitet. Daher wird die austauschbare Komponente in diesen Fällen entfernt und durch eine andere Komponente ersetzt. Die entfernten Komponenten können in einer Werkstatt beispielsweise gewartet und nach der Wartung in ein weiteres Schienenfahrzeug montiert werden, insbesondere in ein Schienenfahrzeug, welches einen Instandhaltungsbedarf hinsichtlich dieser austauschbaren Komponenten hat.

Dabei sind Kenntnisse über die Komponente wünschenswert. Beispielsweise ist die Kenntnis über den Ort der Komponente, das Schienenfahrzeug, in dem sich die Komponenten befindet, die Stelle innerhalb des Schienenfahrzeugs, an dem die Komponenten montiert ist, etc., wünschenswert.

Da sich bestimmte Parameter, wie der Durchmesser eines Radsatzes, während des Einsatzes oder im Rahmen der Wartung der Komponente ändern, ist die Kenntnis über den aktuellen Wert dieser Parameter wünschenswert. Eine Änderung des Durchmessers oder des Profils einer austauschbaren Komponente ergibt sich beispielsweise beim Abdrehen der Komponenten im Rahmen der Wartung. Insbesondere die Kenntnis über den Durchmesser eines Rades des Schienenfahrzeugs ist für den Betrieb des Schienenfahrzeugs von Bedeutung, da die Ermittlung der Geschwindigkeit, des Ortes, der Position und/oder Orientierung des Schienenfahrzeugs von dem Durchmesser des Rades abhängt. Da Fehler bei dem Betrieb des Fahrzeugs (auf Basis eines falschen Raddurchmessers) einen nachteiligen Einfluss auf den Betrieb des Schienenfahrzeugs haben, kann hier von einer sicherheitsrelevanten Kenntnis des Raddurchmessers gesprochen werden. "Sicherheitsrelevant" ist im vorliegenden Sachverhalt als Sicherheit im Sinne von Safety (funktionaler Sicherheit) zu verstehen.

Die Erfindung löst diese Anforderungen, indem eine Leseeinrichtung an einer Drehgestellvorrichtung und/oder einem Fahrzeugkasten des Schienenfahrzeugs befestigt ist, welche eingerichtet ist, das Markierungselement auszulesen. So liest die Leseeinrichtung Komponenteninformationen aus dem oder denjenigen Markierungselementen aus, die sich in der Umgebung der Leseeinrichtung befinden. Die Komponenteninformation wird beim Betrieb des Schienenfahrzeugs berücksichtigt.

Das Schienenfahrzeug ist beispielsweise ein Triebzug. Alternativ ist das Schienenfahrzeug beispielsweise eine Lokomotive, ein Wagen und/oder ein Zugverband.

Unter austauschbare Komponente ist vorzugsweise eine serialisierte Komponente zu verstehen, die über die Lebensdauer zwischen Schienenfahrzeugen getauscht wird. Beispielsweise umfasst die austauschbare Komponente einen Radsatz, ein Drehgestell, ein Fahrmotor, ein Klimagerät, ein Pantopgraph, etc.

Die Komponenteninformation repräsentiert vorzugsweise eine Beschaffenheit, weiter vorzugsweise eine für den Betrieb des Schienenfahrzeugs relevante Komponente.

Die Drehgestellvorrichtung umfasst vorzugsweise ein Drehgestell des Schienenfahrzeugs.

Unter den Begriff "Fahrzeugkasten" fallen gemäß dem fachmännischen Verständnis Komponenten des Schienenfahrzeugs, wie der Fahrzeugkasten und/oder Lokomotivkasten, die den Aufbau eines Eisenbahnwagens, eines Triebwagens und/oder eine Lokomotive bezeichnen.

Der Fachmann versteht den Begriff "Umgebung" der Leseeinrichtung vorzugsweise dahingehend, dass die Leseeinrichtung eine Komponenteninformation aus denjenigen Markierungselementen ausliest, die sich innerhalb einer Reichweite für das drahtlose Auslesen befinden. Es können demnach mehrere Komponenteninformationen von mehreren in der Umgebung befindlichen Markierungselementen ausgelesen werden. Mit anderen Worten: Es werden lediglich diejenigen Markierungselemente erfasst, die sich innerhalb der Reichweite der Leseeinrichtung befinden.

Die Formulierung, wonach das Schienenfahrzeug in Abhängigkeit der ausgelesenen Komponenteninformation betrieben wird, ist beispielsweise dahingehend zu verstehen, dass die Komponenteninformation bei einer Steuerung des Schienenfahrzeugs berücksichtigt wird. Beispielsweise hat die Komponenteninformation unmittelbar Einfluss auf eine mittels einer Fahrzeugsteuerung ermittelte Steuergröße für den Betrieb des Schienenfahrzeugs. Ein mittelbarer Einfluss kann dadurch realisiert sein, dass die Komponenteninformation Grundlage für die Ermittlung oder den Abruf einer weiteren Größe (beispielsweise aus einer fahrzeugseitigen oder landseitigen Datenbank) bildet. Diese weitere Größe kann wiederum einen unmittelbaren Einfluss auf die Ermittlung der Steuergröße für den Betrieb des Schienenfahrzeugs haben.

Die Leseeinrichtung ist vorzugsweise datentechnisch mit einem Kommunikationsnetz, beispielsweise einem Ethernet-Netz, des Schienenfahrzeugs verbunden. An das Kommunikationsnetz ist weiter vorzugsweise eine Fahrzeugsteuereinrichtung datentechnisch angeschlossen. Über das Kommunikationsnetz wird die Komponenteninformation vorzugsweise an die Fahrzeugsteuereinrichtung übertragen. Die Fahrzeugsteuereinrichtung ist vorzugsweise eingerichtet, das Fahrzeug in Abhängigkeit der Komponenteninformation zu steuern (und damit zu betreiben).

Die Leseeinrichtung umfasst vorzugsweise alternativ oder zusätzliche eine Schreibeinrichtung, welche eingerichtet ist, Informationen in einem Speicher zu schreiben.

Gemäß einer weiteren bevorzugten Ausführungsform des erfindungsgemäßen Verfahrens identifiziert die Komponenteninformation die austauschbare Komponente.

Die Komponenteninformation ist vorzugsweise eine Identifikationsinformation, welche die austauschbare Komponente identifiziert. Die Identifikationsinformation ist beispielsweise eine eindeutige Nummer.

Die Identifikation der austauschbaren Komponenten wird beispielsweise verwendet, um weitere Komponenteninformationen zu ermitteln oder abzurufen. Beispielsweise kann die Identifikation dazu dienen, eine die Beschaffenheit der Komponente repräsentierende Information abzurufen. Die weitere Komponenteninformation wird beispielsweise von einer landseitigen Einrichtung abgerufen.

Die Komponenteninformation wird beispielsweise bei der Herstellung der Komponente erstmalig ermittelt.

Gemäß einer weiteren bevorzugten Ausführungsform des erfindungsgemäßen Verfahrens wird die Komponenteninformation bei einer Instandhaltung der austauschbaren Komponenten ermittelt. Dies stellt eine besonders zweckmäßige Ausführungsform dar, da austauschbare Komponenten eines Schienenfahrzeugs im Rahmen der Instandhaltung häufig neu vermessen und getestet werden. Demnach eignet sich die Instandhaltung besonders für die Ermittlung der Komponenteninformation.

Nach einer bevorzugten Weiterbildung dieser Ausführungsform umfasst die austauschbare Komponente ein Rad des Schienenfahrzeugs, wobei die Instandhaltung ein Abdrehen des Rades umfasst. Dies stellt eine besonders vorteilhafte Ausführungsform des erfindungsgemäßen Verfahrens dar, da Räder eines Schienenfahrzeugs in besonderem Maße einem Verschleiß ausgesetzt sind.

Das Rad ist beispielsweise Teil eines Radsatzes.

Nach einer bevorzugten Weiterbildung dieser Ausführungsform umfasst die austauschbare Komponente ein Drehgestell.

Bei einer weiteren bevorzugten Weiterbildung dieser Ausführungsform umfasst die Komponenteninformation den Raddurchmesser, das Radprofil und/oder maximale Lasten.

Das Abdrehen des Rades führt in der Regel zu einem geänderten Raddurchmesser und/oder einem geänderte Radprofil. Daher ist es besonders zweckdienlich, die Komponenteninformation nach dem Abdrehen des Rades zu ermitteln.

Bei einer bevorzugten Ausführungsform des erfindungsgemäßen Verfahrens enthält die Komponenteninformation einen Zeitstempel, welche den Zeitpunkt der Instandhaltung angibt.

Der Zeitpunkt ist beispielsweise der Tag, an dem die Instandhaltung stattgefunden hat. Alternativ oder zusätzlich umfasst der Zeitpunkt die Uhrzeit, an dem die Instandhaltung stattgefunden hat. Zudem können weitere übergeordnete Informationen hinterlegt sein, beispielsweise die verantwortliche Stelle der letzten Bearbeitung.

Bei einer bevorzugten Weiterbildung dieser Ausführungsform wird eine Betriebsdauer des Schienenfahrzeugs mittels einer Fahrzeugsteuereinrichtung ermittelt und anhand des Zeitstempels und der Betriebsdauer eine Verwendungsdauer der Komponente im Betrieb ermittelt.

Das Markierungselement ist beispielsweise ein aufgebrachtes oder aufgedrucktes Markierungselement. In diesem Fall ist die Leseeinrichtung beispielsweise eine optische Leseeinrichtung, welche das Markierungselement optisch ausliest.

Nach einer bevorzugten Ausführungsform des erfindungsgemäßen Verfahrens umfasst das Markierungselement ein aktives und/oder passives Transponderelement, welches die Leseeinrichtung auf Basis von elektromagnetischen Wellen ausliest.

Das passive Transponderelement ist beispielsweise ein RFID-Tag und die Leseeinrichtung ist beispielsweise ein RFID-Lesegerät.

Das aktive Transponderelement ist beispielsweise ein Beacon-Element und die Leseeinrichtung ist beispielsweise ein Lesegerät, welches das Beacon-Element anhand des Bluetooth-Standards ausliest.

Nach einer weiteren bevorzugten Ausführungsform des erfindungsgemäßen Verfahrens weist das Markierungselement einen Speicher auf, welcher die Komponenteninformation speichert und mittels der Leseeinrichtung ausgelesen wird.

Die Komponenteninformation wird vorzugsweise während der Instandhaltung in den Speicher geschrieben. Beispielsweise wird der aktuelle Raddurchmesser und/oder das Radprofil automatisiert mittels der Drehmaschine (Drehbank) während des Abdrehens oder nach dem Abdrehen in den Speicher geschrieben. Alternativ kann die Komponenteninformation durch die für die Instandhaltung zuständige Werkstatt in den Speicher geschrieben werden. Dabei bleibt die Identifikationsinformation vorzugsweise unverändert.

Weiter vorzugsweise ist die Leseeinrichtung eine Lese/Schreibeinrichtung, welche eingerichtet ist, eine Information in den Speicher des Markierungselements zu schreiben. Beispielsweise können Betriebsdaten, wie die Laufleistung und/oder Betriebsstunden, mittels der Leseeinrichtung in den Speicher des Markierungselements geschrieben werden. Die Lese/Schreibeinrichtung kann diese Daten auf Basis von aus der Fahrzeugsteuerung empfangenen Informationen regelmäßig aktualisieren (beispielsweise inkrementieren). Nach einem Austausch oder Ersatz der Komponente wird das Schienenfahrzeug mit dem im Speicher des Markierungselements hinterlegten Wert weiter betrieben. Die gespeicherten Daten können zudem für die weitere Instandhaltung und deren Planung genutzt werden.

Bei einer weiteren bevorzugten Ausführungsform des erfindungsgemäßen Verfahrens liest die Leseeinrichtung eine Streckeninformation aus einer an der Fahrstrecke des Schienenfahrzeugs befestigten Streckeneinrichtung aus.

Bei einer bevorzugten Weiterbildung dieser Ausführungsform wird ein Befestigungsabstand zwischen der Leseeinrichtung und einer weiteren Leseeinrichtung in Längsrichtung entlang des Schienenfahrzeugs bereitgestellt. Der Befestigungsabstand wird mit einem Wegabstand verglichen. Der Wegabstand ist ein Abstand zwischen einem ersten Ort, an dem die Leseeinrichtung auf die Streckeneinrichtung trifft und einem zweiten Ort, an dem die weitere Leseeinrichtung auf die Streckeneinrichtung trifft.

Ein Vorteil dieser Ausführungsform ist, dass bei einem Vergleich festgestellt werden kann, ob der ermittelte Wegabstand größer als der jeweilige Befestigungsabstand zwischen zwei Leseeinrichtungen ist. Auf diese Weise kann auf einen reduzierten Raddurchmesser geschlossen werden und dieser abgeschätzt werden. Der abgeschätzte Raddurchmesser kann beim weiteren Betrieb des Schienenfahrzeugs berücksichtigt werden.

Alternativ oder zusätzlich kann anhand des reduzierten Raddurchmessers entschieden werden, ob und, wenn ja, wann eine Wartung des Rades durchzuführen ist

Die eingangs genannte Aufgabe wird ferner durch eine Vorrichtung der eingangs genannten Art gelöst. Die Vorrichtung umfasst eine Leseeinrichtung, welche eingerichtet ist, das Markierungselement auszulesen. Die Leseeinrichtung ist an einer Drehgestellvorrichtung und/oder einem Fahrzeugkasten des Schienenfahrzeugs befestigt. Die Leseeinrichtung ist eingerichtet, eine Komponenteninformation aus dem Markierungselement, welches sich in der Umgebung der Leseeinrichtung befindet, auszulesen. Eine Fahrzeugsteuereinrichtung ist eingerichtet, das Schienenfahrzeug in Abhängigkeit der ausgelesenen Komponenteninformation zu steuern.

Die eingangs genannte Aufgabe wird ferner durch ein Schienenfahrzeug mit einer Vorrichtung der vorstehend beschriebenen Art gelöst.

Die eingangs genannte Aufgabe wird ferner durch ein System, umfassend: ein Schienenfahrzeug der vorstehend beschriebenen Art und eine landseitige Einrichtung, welche zumindest zweitweise über eine Kommunikationsverbindung informationstechnisch miteinander verbunden sind, gelöst. Die Kommunikationsverbindung kann zur Übertragung von Informationen zwischen dem Schienenfahrzeug und der landseitigen Einrichtung dienen. Beispielsweise können ergänzende Informationen auf Basis der ausgelesenen Komponenteninformation von der landseitigen Einrichtung abgerufen und an das Schienenfahrzeug übertragen werden. Diese ergänzenden Informationen können für den Betrieb des Fahrzeugs berücksichtigt werden.

Die Erfindung begrifft ferner ein Verfahren zum Betrieb eines Schienenfahrzeugs mit einer Leseeinrichtungen und wenigstens einer weiteren Leseeinrichtung, die jeweils an dem Schienenfahrzeug befestigt sind. Bei dem Verfahren ist ein Befestigungsabstand zwischen der Leseeinrichtung und der weiteren Leseeinrichtung in Längsrichtung entlang des Schienenfahrzeugs bereitgestellt. Der Befestigungsabstand wird mit einem Wegabstand verglichen, wobei der Wegabstand ein Abstand zwischen einem ersten Ort des Schienenfahrzeugs, an dem die Leseeinrichtung auf eine Streckeneinrichtung, welche mittels der Leseeinrichtung erfasst wird, trifft, und einem zweiten Ort des Schienenfahrzeugs, an dem die weitere Leseeinrichtung auf die Streckeneinrichtung trifft, welche mittels der weiteren Leseeinrichtung erfasst wird, ist. Der Befestigungsabstand wird beispielsweise bei einer Installation der Leseeinrichtung im Rahmen der Herstellung des Schienenfahrzeugs ermittelt. Der Wegabstand wird vorzugsweise bei einer Wegmessung mittels eines Drehzahlgebers ermittelt. Wird festgestellt, dass der ermittelte Wegabstand größer als der Befestigungsabstand ist, kann auf einen verringerten Raddurchmesser eines oder mehrerer Räder des Schienenfahrzeugs geschlossen werden.

Zu Vorteilen, Ausführungsformen und Ausgestaltungsdetails der erfindungsgemäßen Vorrichtung, des erfindungsgemäßen Schienenfahrzeugs und des erfindungsgemäßen Systems kann auf die vorstehende Beschreibung zu den entsprechenden Verfahrensmerkmalen des erfindungsgemäßen Verfahrens zum Betrieb des Schienenfahrzeugs verwiesen werden.

Ein Ausführungsbeispiel der Erfindung wird anhand der Zeichnungen erläutert. Es zeigen:
- Figur 1: schematisch den Aufbau eines Ausführungsbeispiels eines erfindungsgemäßen Systems,
- Figur 2: eine perspektivische Ansicht eines Radsatzes und

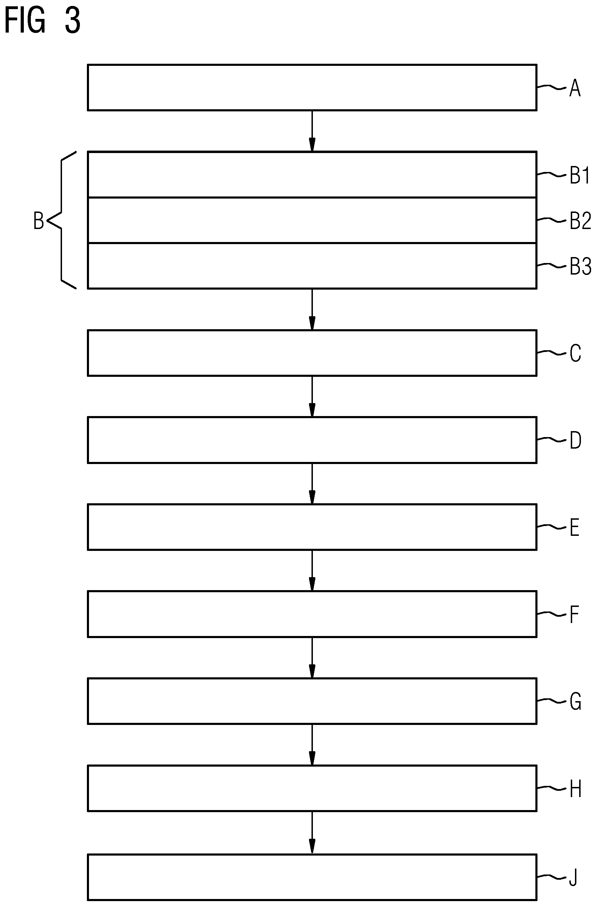

- Figur 3: schematisch den Ablauf eines Ausführungsbeispiels eines erfindungsgemäßen Verfahrens.

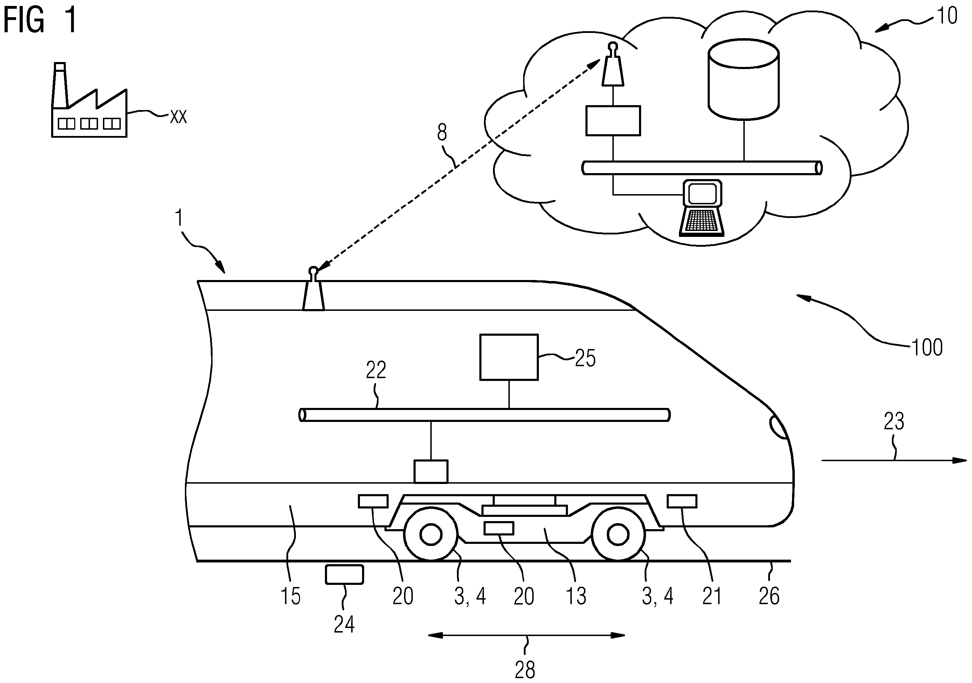

Figur 1 zeigt ein System 100 mit einem Schienenfahrzeug 1 und einer landseitigen Einrichtung 10. Das Schienenfahrzeug 1 und die landseitige Einrichtung 10 sind zumindest zeitweise über eine Kommunikationsverbindung 8 informations- bzw. datentechnisch miteinander verbunden. Während die Kommunikationsverbindung 8 besteht, können Informationen bzw. Daten zwischen dem Schienenfahrzeug 1 und der landseitigen Einrichtung 10 übertragen werden.

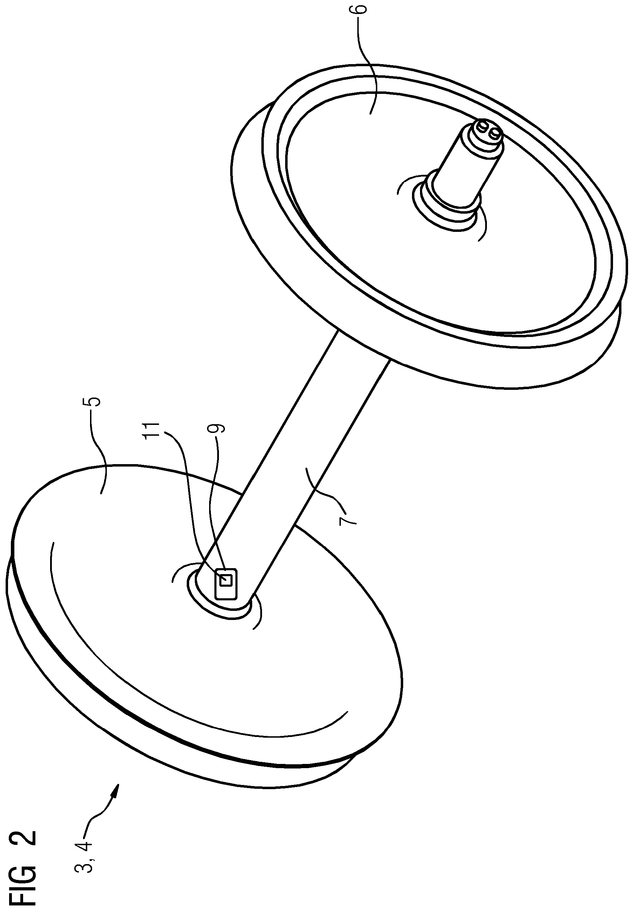

Das Schienenfahrzeug 1 weist mehrere austauschbare Komponenten 3 auf, die jeweils als Radsatz 4 ausgebildet sind. Ein Radsatz 4 dieser Art mit zwei Rädern 5, 6 und einer Radsatzwelle 7 ist in einer perspektivischen Ansicht in Figur 2 gezeigt.

In einem Verfahrensschritt A wird ein drahtlos auslesbares Markierungselement 9 an der austauschbaren Komponenten 3 befestigt. Das Markierungselement 9 ist ein RFID-Tag (RFID: Radio Frequency Identification). Das Markierungselement 9 verbleibt während der Lebensdauer der Komponente 3, beispielsweise während des Betriebs des Schienenfahrzeugs 1 und im Rahmen der Instandhaltung, an der austauschbaren Komponenten 3.

In einem Verfahrensschritt B wird eine Komponenteninformation ermittelt. Die Komponenteninformation beinhaltet eine Identifikation der Komponente 3, die in einem Verfahrensschritt B1 bereitgestellt wird. Die Identifikation ist beispielsweise in Form einer eindeutigen Nummer verwirklicht.

Zudem wird in einem Verfahrensschritt B2 der Durchmesser des Rades 5 bzw. 6 gemessen, abgelesen und der Komponenteninformation hinzugefügt. Die Identifikation bzw. der Durchmesser werden beispielsweise im Rahmen einer Instandhaltung des Radsatzes 4 bereitgestellt bzw. gemessen. Außerdem wird in einem Verfahrensschritt B3 ein Zeitstempel, erstellt und der Komponenteninformation hinzugefügt. Der Zeitstempel gibt beispielsweise den Zeitpunkt oder ein Zeitintervall an, an dem bzw. innerhalb dessen die Instandhaltung stattgefunden hat.

Die Komponenteninformation wird in einem Verfahrensschritt C in einen Speicher 11 des Markierungselements 9 geschrieben.

In einem Verfahrensschritt D wird die Komponente 3 (z. B. der Radsatz 4) in das Schienenfahrzeug 1 eingebaut. Grund für den Einbau ist beispielsweise, dass ein instandhaltungsbedürftiger Radsatz aus dem Schienenfahrzeug 1 entfernt wurde und dieser durch den Radsatz 4 ersetzt wird.

An einer Drehgestellvorrichtung 13 oder an einem Fahrzeugkasten 15 des Schienenfahrzeugs 1 ist eine Leseeinrichtung 20 befestigt. Die Leseeinrichtung 20 ist beispielsweise ein RFID-Lesegerät. Mittels der Leseeinrichtung 20 wird das Markierungselement 9 ausgelesen. Die Leseeinrichtung 20 ist datentechnisch mit einem Kommunikationsnetz des Schienenfahrzeugs 1 verbunden, welches in dem in Figur 2 gezeigten Ausführungsbeispiel ein Ethernet-Netz 22 ist. Über das Ethernet-Netz 22 wird die Komponenteninformation an eine Fahrzeugsteuereinrichtung 25 in einem Verfahrensschritt E übertragen.

Das Schienenfahrzeug 1 wird in einem Verfahrensschritt F in Abhängigkeit der ausgelesenen Komponenteninformation betrieben. Beispielsweise hat der Raddurchmesser als Komponenteninformation Einfluss auf eine Ermittlung der aktuellen Geschwindigkeit des Schienenfahrzeugs 1 unter Berücksichtigung der Drehzahl pro Zeiteinheit. Die aktuelle Geschwindigkeit des Schienenfahrzeugs 1 wird wiederum beim Betrieb des Schienenfahrzeugs 1 genutzt.

Während eines Fahrbetriebs des Schienenfahrzeugs 1 liest die Leseeinrichtung 20 in einem Verfahrensschritt G zudem Streckeninformationen aus einer Streckeneinrichtung 24, die ortsfest an einer Fahrstrecke 26 des Schienenfahrzeugs 1 angeordnet ist, aus.

Bei einem Schienenfahrzeug 1, welches entlang seiner Längserstreckung mehrere Leseeinrichtungen 20 aufweist, können die Befestigungsabstände der Leseeinrichtungen 20 in Längsrichtung 23 bzw. in Fahrtrichtung in einem Verfahrensschritt H bereitgestellt werden. In einem Verfahrensschritt J wird der jeweilige Befestigungsabstand 28 zwischen der Leseeinrichtung 20 und einer weiteren Leseeinrichtung 21 entlang des Schienenfahrzeugs 1 mit einem Wegabstand verglichen. Der Wegabstand wird bei einer relativen Wegmessung anhand einer Drehzahlmessung zwischen dem ersten Ort, an dem die erste Leseeinrichtung 20 auf die Streckeneinrichtung 24 trifft, und einem zweiten Ort, an dem eine zweiten Leseeinrichtung 21 auf die Streckeneinrichtung 24 trifft, ermittelt. Wird bei dem Vergleich festgestellt, dass der ermittelte Wegabstand größer als der jeweilige Befestigungsabstand 28 ist, kann auf einen reduzierten Raddurchmesser geschlossen werden und dieser abgeschätzt werden. Der abgeschätzte Raddurchmesser kann beim weiteren Betrieb des Schienenfahrzeugs 1 berücksichtigt werden. Alternativ oder zusätzlich kann anhand des reduzierten Raddurchmessers entschieden werden, ob und, wenn ja, wann eine Wartung des Rades 4 durchzuführen ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betrieb eines Schienenfahrzeugs (1) mit einer Mehrzahl von austauschbaren Komponenten (3),
bei welchem
- ein drahtlos auslesbares Markierungselement (9) an wenigstens einer der Mehrzahl von austauschbaren Komponenten (3) befestigt ist,
**dadurch gekennzeichnet, dass**
- eine Leseeinrichtung (20, 21)
o eingerichtet ist, das Markierungselement (9) auszulesen, und
o an einer Drehgestellvorrichtung (13) und/oder einem Fahrzeugkasten (15) des Schienenfahrzeugs (1) befestigt ist,
- eine Komponenteninformation aus dem Markierungselement (9), welches sich in der Umgebung der Leseeinrichtung (20, 21) befindet, ausgelesen wird und
- das Schienenfahrzeug (1) in Abhängigkeit der ausgelesenen Komponenteninformationen betrieben wird.

2. Verfahren nach Anspruch 1,
**dadurch gekennzeichnet, dass**
die Komponenteninformation die austauschbare Komponenten (3) identifiziert.

3. Verfahren nach Anspruch 1 oder 2,
**dadurch gekennzeichnet, dass**
die Komponenteninformation bei einer Instandhaltung der austauschbaren Komponente (3) ermittelt und hinterlegt wird.

4. Verfahren nach Anspruch 3,
**dadurch gekennzeichnet, dass**
die austauschbare Komponente (3) ein Rad (5,6) des Schienenfahrzeugs (1) umfasst und die Instandhaltung ein Abdrehen des Rades (5,6) umfasst.

5. Verfahren nach Anspruch 3 oder 4,
**dadurch gekennzeichnet, dass**
die austauschbare Komponente (3) ein Drehgestell umfasst.

6. Verfahren nach Anspruch 4 oder 5,
**dadurch gekennzeichnet, dass**
die Komponenteninformation den Raddurchmesser, das Radprofil und/oder maximale Lasten des Drehgestells umfasst.

7. Verfahren nach einem der vorhergehenden Ansprüche,
**dadurch gekennzeichnet, dass**
die Komponenteninformation einen Zeitstempel, welcher den Zeitpunkt der Instandhaltung angibt, enthält.

8. Verfahren nach Anspruch 7,
**dadurch gekennzeichnet, dass**
eine Betriebsdauer des Schienenfahrzeugs mittels einer Fahrzeugsteuereinrichtung ermittelt und
anhand des Zeitstempels und der Betriebsdauer eine Verwendungsdauer der Komponente im Betrieb ermittelt wird.

9. Verfahren nach einem der vorhergehenden Ansprüche, **dadurch gekennzeichnet, dass**
das Markierungselement (9) ein aktives und/oder passives Transponderelement umfasst, welches die Leseeinrichtung (20, 21) auf Basis von elektromagnetischen Wellen ausliest.

10. Verfahren nach einem der vorhergehenden Ansprüche, **dadurch gekennzeichnet, dass**
das Markierungselement (9) einen Speicher (11) aufweist, welcher die Komponenteninformation speichert und mittels der Leseeinrichtung (20, 21) ausgelesen wird.

11. Verfahren nach einem der vorhergehenden Ansprüche, **dadurch gekennzeichnet, dass**
die Leseeinrichtung (20, 21) eine Streckeninformation aus einer ortsfest an der Fahrstrecke (26) des Schienenfahrzeugs (1) befestigten Streckeneinrichtung (24) ausliest.

12. Verfahren nach Anspruch 11,
**dadurch gekennzeichnet, dass**
ein Befestigungsabstand (28) zwischen der Leseeinrichtung (20, 21) und einer weiteren Leseeinrichtung (21) in Längsrichtung (23) entlang des Schienenfahrzeugs (1) bereitgestellt wird (H) und
der Befestigungsabstand (28) mit einem Wegabstand verglichen wird (J), wobei der Wegabstand ein Abstand zwischen
- einem ersten Ort des Schienenfahrzeugs (1), an dem die Leseeinrichtung (20) auf die Streckeneinrichtung (24) trifft und
- einem zweiten Ort des Schienenfahrzeugs (1), an dem die weitere Leseeinrichtung (21) auf die Streckeneinrichtung (24) trifft,
ist.

13. Vorrichtung zum Betrieb eines Schienenfahrzeugs (1) mit einer Mehrzahl von austauschbaren Komponenten (3),
umfassend:
- ein drahtlos auslesbares Markierungselement (9), welches an wenigstens einer der Mehrzahl von austauschbaren Komponenten (3) befestigt ist,
**gekennzeichnet durch**
- eine Leseeinrichtung (20, 21), welche eingerichtet ist, das Markierungselement (9) auszulesen, wobei die Leseeinrichtung (20, 21)
∘ an einer Drehgestellvorrichtung (13) und/oder einem Fahrzeugkasten (15) des Schienenfahrzeugs (1) befestigt ist und
∘ eingerichtet ist, eine Komponenteninformation aus dem Markierungselement (9), welches sich in der Umgebung der Leseeinrichtung (20, 21) befindet, auszulesen und
- eine Fahrzeugsteuereinrichtung (25), welche eingerichtet ist, das Schienenfahrzeug (1) in Abhängigkeit der ausgelesenen Komponenteninformationen zu steuern.

14. Schienenfahrzeug, umfassend eine Vorrichtung nach Anspruch 13.

15. System (100), umfassend:
- ein Schienenfahrzeug (1) nach Anspruch 14 und
- eine landseitige Einrichtung (10),
welche zumindest zeitweise über eine Kommunikationsverbindung (8) informationstechnisch miteinander verbunden sind.

16. Verfahren zum Betrieb eines Schienenfahrzeugs (1) mit einer Leseeinrichtung und wenigstens einer weiteren Leseeinrichtung, die jeweils an dem Schienenfahrzeug befestigt sind,
bei welchem
ein Befestigungsabstand zwischen der Leseeinrichtung und der weiteren Leseeinrichtung in Längsrichtung entlang des Schienenfahrzeugs bereitgestellt ist und
der Befestigungsabstand mit einem Wegabstand verglichen wird, wobei der Wegabstand ein Abstand zwischen
- einem ersten Ort des Schienenfahrzeugs, an dem die Leseeinrichtung auf eine Streckeneinrichtung trifft, welche mittels der Leseeinrichtung erfasst wird, und
- einem zweiten Ort des Schienenfahrzeugs, an dem die weitere Leseeinrichtung auf die Streckeneinrichtung trifft, welche mittels der weiteren Leseeinrichtung erfasst wird,
ist.
